(19) Europäisches Patentamt
European Patent Office
Office européen des brevets

(11) **EP 3 552 316 B1**

(12) **FASCICULE DE BREVET EUROPEEN**

(45) Date de publication et mention
de la délivrance du brevet:
**10.11.2021 Bulletin 2021/45**

(51) Int Cl.:
***H04B 1/7163*** *(2011.01)* ***H03K 3/01*** *(2006.01)*
***H04L 7/00*** *(2006.01)*

(21) Numéro de dépôt: **17821519.0**

(22) Date de dépôt: **11.12.2017**

(86) Numéro de dépôt international:
**PCT/EP2017/082278**

(87) Numéro de publication internationale:
**WO 2018/108837 (21.06.2018 Gazette 2018/25)**

(54) **PROCÉDÉ ET DISPOSITIF POUR LA DÉTECTION D'UNE IMPULSION D'UN SIGNAL**

VERFAHREN UND VORRICHTUNG ZUR DETEKTION EINES PULSES EINES SIGNALS

METHOD AND DEVICE FOR THE DETECTION OF A PULSE OF A SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2016 FR 1662287**

(43) Date de publication de la demande:
**16.10.2019 Bulletin 2019/42**

(73) Titulaire: **Uwinloc**
**31200 Toulouse (FR)**

(72) Inventeur: **MENNEKENS, Jan**
**31200 Toulouse (FR)**

(74) Mandataire: **Pichon, Julien**
**Oak & Fox**
**94 rue La Fayette**
**(Esc. D)**
**75010 Paris (FR)**

(56) Documents cités:
**EP-A1- 2 790 035 US-A1- 2001 053 175**

- **VAN HELLEPUTTE N ET AL: "A 70 pJ/Pulse
Analog Front-End in 130 nm CMOS for UWB
Impulse Radio Receivers", IEEE JOURNAL OF
SOLID-STATE CIRCUITS, IEEE SERVICE
CENTER, PISCATAWAY, NJ, USA, vol. 44, no. 7,
1 juillet 2009 (2009-07-01), pages 1862-1871,
XP011263264, ISSN: 0018-9200, DOI:
10.1109/JSSC.2009.2020220**
- **JIANYUN HU ET AL: "An Energy-Efficient IR-UWB
Receiver Based on Distributed Pulse Correlator",
IEEE TRANSACTIONS ON MICROWAVE THEORY
AND TECHNIQUES, IEEE SERVICE CENTER,
PISCATAWAY, NJ, US, vol. 61, no. 6, 1 juin 2013
(2013-06-01), pages 2447-2459, XP011511924,
ISSN: 0018-9480, DOI:
10.1109/TMTT.2013.2259371**

EP 3 552 316 B1

**Description**

**DOMAINE TECHNIQUE**

La présente invention appartient au domaine des systèmes de localisation d'objets, et concerne plus particulièrement un procédé de détection, par un dispositif récepteur, d'impulsions d'un signal. La présente invention trouve une application particulièrement avantageuse, bien que nullement limitative, dans les systèmes de localisation sans fil à bande ultra large.

**ÉTAT DE LA TECHNIQUE**

Par « bande ultra large » (« Ultra Wide Band », encore désigné par l'acronyme UWB, dans la littérature anglo-saxonne), on fait référence à des signaux radioélectriques émis par un ou plusieurs dispositifs émetteurs à destination d'un ou plusieurs dispositifs récepteurs dudit système de localisation, et présentant un spectre fréquentiel instantané de largeur (à -10 dB par rapport à la puissance maximale dudit spectre fréquentiel instantané) supérieure à 500 mégahertz.

Les applications de l'UWB sont diverses, et concernent généralement la transmission locale de données numériques sans fil à haut débit, mais aussi les radars ou encore les systèmes d'imagerie médicale.

Plus particulièrement, les systèmes UWB sont avantageusement adaptés pour la localisation de radio-marqueurs (encore dits radio-étiquettes) apposés respectivement sur des objets positionnés fixes dans un environnement fermé, comme par exemple un hangar, ou bien en mouvement au voisinage d'une zone spécifiquement configurée pour effectuer ladite localisation.

D'une manière générale, un dispositif émetteur d'un tel système de localisation émet à destination de plusieurs dispositifs récepteurs un signal radio. L'information véhiculée sur ce signal radio correspond classiquement à des données encodées au moyen d'une modulation d'un type particulier, par exemple une modulation de type « OOK » (acronyme de l'expression anglo-saxonne « On-Off Keying »). Le signal radio ainsi émis prend la forme d'un train d'impulsions de durées respectives très courtes, par exemple de l'ordre d'une nanoseconde. Ces impulsions extrêmement courtes dans le domaine temporel présentent dans le domaine fréquentiel un spectre à bande ultra large caractéristique de la technologie d'impulsions radio UWB.

Aussi, afin de localiser le dispositif émetteur, il convient tout d'abord de détecter les impulsions dans le signal reçu. En effet, ce n'est qu'une fois la forme du signal radio identifiée qu'il devient possible d'en extraire l'information relative à l'identité du dispositif émetteur ainsi qu'à sa position.

A cet effet, on connait divers procédés permettant d'identifier les impulsions d'un signal reçu. D'une manière générale, ces procédés sont mis en œuvre par des corrélateurs tirant partie de caractéristiques liées à l'encodage du signal émis. Par exemple, le dispositif récepteur peut comporter un corrélateur stockant une réplique locale du signal émis. Ainsi, le signal reçu est corrélé avec ladite réplique locale (par multiplication complexe conjuguée puis intégration sur une durée de l'ordre de celle d'une impulsion). De cette manière, la corrélation porte uniquement sur le signal émis, ce qui permet de réduire l'influence du bruit. Toutefois l'utilisation d'une réplique locale se révèle efficace uniquement si le signal émis subit une faible distorsion.

Une autre manière de procéder consiste à utiliser un corrélateur fonctionnant sur le principe d'une transmission de référence retardée (« Delay-Hopped Transmitted-Reference », encore désigné par l'acronyme DHTR dans la littérature anglo-saxonne). Typiquement, il s'agit d'encoder chaque donnée transmise par la présence, d'une part, d'une première impulsion, dite impulsion de référence, et d'autre part par la présence ou bien l'absence d'une deuxième impulsion, dite impulsion de modulation et séparée de l'impulsion de référence par une durée prédéterminée dite durée de retard, selon la valeur de la donnée. Le corrélateur est dès lors configuré pour détecter la présence ou l'absence desdites impulsions de modulation en corrélant le signal reçu avec ce même signal retardé de ladite durée de retard. Ce type de procédé offre de bonnes performances en termes de détection d'impulsions, y compris en présence de distorsions. Par contre, il n'en reste pas moins complexe à mettre en œuvre du fait qu'une donnée, a priori non destinée à être encodée par une présence d'impulsion en raison de sa valeur, se voit néanmoins encodée par la présence d'une impulsion de référence. Autrement dit, le système de localisation doit être conçu pour être en mesure de transmettre ce surplus de données, donc d'énergie, ce qui représente un inconvénient en termes de coûts de fabrication et d'efficacité énergétique.

Le document US2001/053175 A1 décrit un procédé pour la détection d'impulsions d'un signal par un dispositif récepteur basé sur le principe DHTR expliqué ci-dessus.

**EXPOSÉ DE L'INVENTION**

La présente invention a pour objectif de remédier à tout ou partie des inconvénients de l'art antérieur, notamment ceux exposés ci-avant, en proposant une solution qui permette la détection, par un dispositif récepteur, des impulsions d'un signal reçu par ce dispositif récepteur, cette détection étant précise et robuste vis-à-vis de distorsions subies par le signal lors de sa transmission. En outre, la présente invention vise à proposer une solution limitant le nombre d'impulsions transmises.

L'invention est définie par l'objet des revendications indépendantes 1 et 8. Les modes de réalisation préférentiels sont définies par les revendications dépendantes.

A cet effet, et selon un premier aspect, l'invention concerne un procédé pour la détection, par un dispositif récepteur, d'une impulsion d'un signal reçu par ledit dispositif récepteur, ledit signal reçu correspondant à des données émises avec une période $T_c$ prédéterminée, chaque donnée étant encodée par une présence ou une absence d'impulsion. En outre, ledit procédé comporte les étapes suivantes :

- une étape de décalage temporel du signal reçu selon un nombre prédéterminé $N_s$ de retards correspondant à des multiples différents de $T_c$, de sorte à générer $N_s$ signaux retardés,
- une étape de corrélation, au niveau d'un instant candidat pour la détection d'une impulsion, du signal reçu avec chacun des signaux retardés, de sorte à obtenir $N_s$ valeurs de corrélation associées audit instant candidat,
- une étape de calcul d'une valeur maximale de corrélation parmi les $N_s$ valeurs de corrélation associées à l'instant candidat,
- une étape de détection d'une impulsion du signal reçu en fonction de ladite valeur maximale de corrélation.

Dans des modes particuliers de mise en œuvre, le procédé pour la détection peut comporter en outre l'une ou plusieurs des caractéristiques suivantes, prises isolément ou selon toutes les combinaisons techniques possibles.

Dans un mode particulier de mise en œuvre, le nombre de données est égal à $N_c$ et dans lequel deux données encodant respectivement des présences d'impulsions sont séparées par au plus $N_m$ données encodant respectivement des absences d'impulsions, le nombre $N_s$ de signaux retardés est compris dans l'intervalle $[N_m+1,N_c-1]$ et les retards respectifs desdits signaux retardés sont déterminés par

$$R_j = j \times T_c,$$

avec j un nombre entier compris dans l'intervalle $[1,N_s]$.

Dans un mode particulier de mise en œuvre, le nombre $N_s$ de signaux retardés est égal à $N_m+1$.

Dans un mode particulier de mise en œuvre, l'étape de détection d'impulsions du signal reçu comporte une comparaison de la valeur maximale de corrélation associée audit instant candidat avec une valeur seuil prédéterminée, de sorte qu'une impulsion est détectée en ledit instant candidat lorsque la valeur maximale de corrélation dudit instant candidat est supérieure à ladite valeur seuil prédéterminée

Dans un mode particulier de mise en oeuvre :

- le signal reçu est corrélé avec chacun des signaux retardés au niveau de plusieurs instants candidats de sorte à obtenir $N_s$ valeurs de corrélation associées à chaque instant candidat,
- la valeur maximale de corrélation est calculée parmi les valeurs de corrélation associées auxdits instants candidats.

Dans un mode particulier de mise en oeuvre :

- le signal reçu est corrélé avec chacun des signaux retardés au niveau de plusieurs instants candidats de sorte à obtenir $N_s$ valeurs de corrélation associées à chaque instant candidat,
- une valeur maximale de corrélation est calculée pour chaque instant candidat, parmi les $N_s$ valeurs de corrélation associées audit instant candidat considéré,
- une impulsion est détectée en fonction desdites valeurs maximales de corrélation.

Dans un mode particulier de mise en œuvre, les instants candidats considérés comportent un instant initial et un instant final, et la différence entre l'instant final et l'instant initial est comprise entre $T_c/2$ et $3 \times T_c/2$.

Selon un second aspect, la présente invention concerne un dispositif récepteur pour la détection d'une impulsion d'un signal reçu par ledit dispositif récepteur, ledit signal reçu correspondant à des données émises avec une période $T_c$ prédéterminée, chaque donnée étant encodée par une présence ou une absence d'impulsion. En outre, ledit dispositif récepteur comporte :

- des moyens configurés pour décaler temporellement le signal reçu selon un nombre prédéterminé $N_s$ de retards correspondant à des multiples différents de $T_c$, de sorte à générer $N_s$ signaux retardés,
- des moyens configurés pour corréler, au niveau d'un instant candidat pour la détection d'une impulsion, le signal reçu avec chacun des signaux retardés, de sorte à obtenir $N_s$ valeurs de corrélation associées audit instant candidat,
- des moyens configurés pour calculer une valeur maximale de corrélation parmi les $N_s$ valeurs de corrélation associées à l'instant candidat,
- des moyens configurés pour détecter une impulsion du signal reçu en fonction de ladite valeur maximale de corrélation.

Dans des modes particuliers de réalisation de l'invention, le dispositif récepteur peut comporter en outre l'une ou plusieurs des caractéristiques suivantes, prises isolément ou selon toutes les combinaisons techniquement possibles.

Dans un mode particulier de réalisation, le nombre de données est égal à $N_c$ et en ce que deux données encodant respectivement une présence d'impulsion sont séparées par au plus $N_m$ données encodant respectivement une absence d'impulsion, le nombre $N_s$ de signaux retardés est compris dans l'intervalle $[N_m+1,N_c-1]$ et les retards respectifs desdits signaux retardés sont déterminés par

$$R_j = j \times T_c,$$

avec j un nombre entier compris dans l'intervalle $[1,N_s]$.

Dans un mode particulier de réalisation, le nombre $N_s$ de signaux retardés est égal à $N_m+1$.

Dans un mode particulier de réalisation, le dispositif récepteur comporte des moyens configurés pour comparer la valeur maximale de corrélation associée audit instant candidat avec une valeur seuil prédéterminée, de sorte qu'une impulsion est détectée en ledit instant candidat lorsque la valeur maximale de corrélation dudit instant candidat est supérieure à ladite valeur seuil prédéterminée.

Dans un mode particulier de réalisation, le dispositif récepteur comporte :

- des moyens configurés pour corréler le signal reçu avec chacun des signaux retardés au niveau de plusieurs instants candidats de sorte à obtenir $N_s$ valeurs de corrélation associées à chaque instant candidat,
- des moyens configurés pour calculer la valeur maximale de corrélation parmi les valeurs de corrélation associées auxdits instants candidats.

Dans un mode particulier de réalisation, le dispositif récepteur comporte :

- des moyens configurés pour corréler le signal reçu avec chacun des signaux retardés au niveau de plusieurs instants candidats de sorte à obtenir $N_s$ valeurs de corrélation associées à chaque instant candidat,
- des moyens configurés pour calculer une valeur maximale de corrélation pour chaque instant candidat, parmi les $N_s$ valeurs de corrélation associées audit instant candidat considéré,
- des moyens configurés pour détecter une impulsion en fonction desdites valeurs maximales de corrélation.

Dans un mode particulier de réalisation, les instants candidats considérés comportent un instant initial et un instant final, et la différence entre l'instant final et l'instant initial est comprise entre $T_c/2$ et $3 \times T_c/2$.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de localisation sans fil.
- Figure 2 : un organigramme d'un exemple de mise en œuvre d'un procédé pour la détection, par un dispositif récepteur, d'une impulsion d'un signal reçu par ce dispositif récepteur.
- Figure 3 : une représentation schématique d'un exemple d'architecture d'une partie du dispositif récepteur.
- Figure 4 : une représentation schématique d'un signal reçu ainsi que de signaux retardés par le procédé de détection selon l'invention.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

La présente invention appartient au domaine de la localisation d'objets dans un environnement aussi bien fermé, comme par exemple un hangar ou un entrepôt, qu'ouvert. Par « localisation », on fait référence ici à la détermination de coordonnées géographiques respectives desdits objets relativement à un point de référence de l'environnement dans lequel ces objets sont positionnés. Cette localisation peut être bidimensionnelle, par exemple si tous les objets sont positionnés dans un même plan géométrique, ou bien tridimensionnelle.

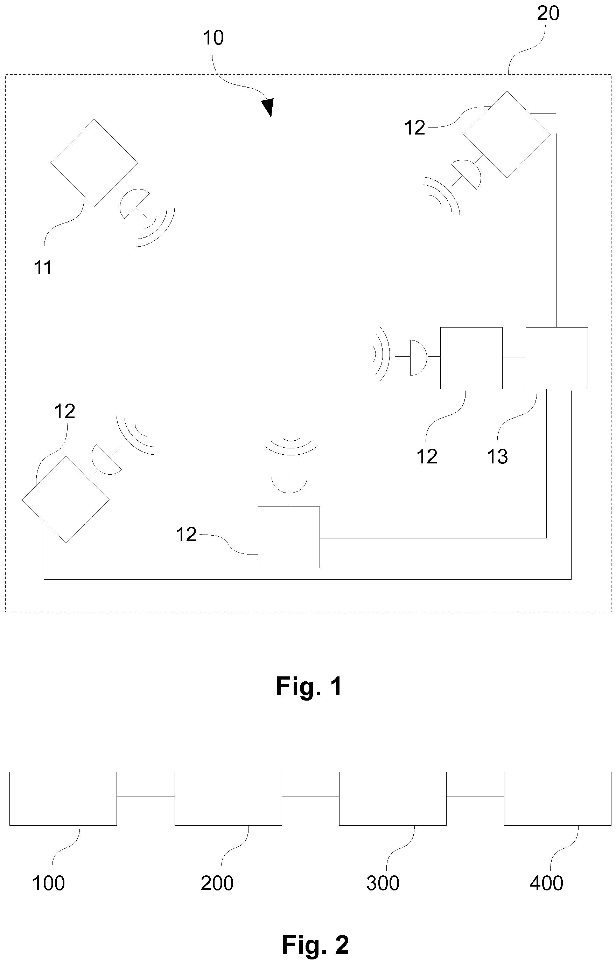

La figure 1 représente schématiquement un exemple de système de localisation sans fil 10.

Le système de localisation sans fil 10 comporte au moins un dispositif émetteur 11 ainsi qu'une pluralité de dispositifs récepteurs 12. Ledit au moins un dispositif émetteur 11 et lesdits dispositifs récepteurs 12 comportent respectivement des moyens de communication sans fil, considérés comme connus de l'homme du métier. Ces moyens de communication sans fil sont adaptés à l'échange de données entre ledit au moins un dispositif émetteur 11 et lesdits dispositifs récepteurs 12 sous la forme de signaux radioélectriques. Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

Dans la suite de la description, un dispositif est qualifié d' « énergétiquement passif » lorsque son fonctionnement repose sur une consommation d'énergie fournie par l'intermédiaire d'une liaison sans fil avec un équipement distant, cette énergie pouvant être stockée dans ledit dispositif pour être utilisée ultérieurement. A l'opposé, on qualifie un dispositif d' « énergétiquement actif » lorsque ce dispositif est configuré pour fonctionner au moyen d'une énergie fournie par une source à laquelle ce dispositif doit être relié de manière continue ou bien récurrente au moyen d'un lien physique (par exemple un cordon électrique). Un tel dispositif énergétiquement actif peut en outre embarquer de l'énergie, notamment avant même sa première utilisation (comme par exemple une énergie électrique contenue dans une batterie électrique intégrée). Autrement dit, l'alimentation énergétique d'un dispositif énergétiquement actif ne peut pas être mise en œuvre au moyen d'une liaison sans fil avec un équipement distant.

Dans le présent exemple de réalisation, et à titre nullement limitatif, ledit au moins un dispositif émetteur 11 est énergétiquement passif, et est configuré de sorte à emmagasiner de l'énergie électrique par effet capacitif. A cet effet, les dispositifs récepteurs 12 sont adaptés à diffuser un champ électromagnétique, ce champ électromagnétique étant capté par ledit au moins un dispositif émetteur 11, lorsqu'il est à sa portée, et converti, de manière connue de l'homme du métier, en courants électriques. Une fois que ledit au moins un dispositif émetteur 11 a emmagasiné suffisamment d'énergie électrique, il s'active et émet un signal radio, représentatif de données comme par exemple un identifiant, et destiné à être reçu par les dispositifs récepteurs 12.

La suite de la description vise plus spécifiquement, mais de manière non limitative, un système de localisation sans fil 10 de type UWB dont ledit au moins un dispositif émetteur 11 est un radio-marqueur (encore dit « tag » dans la littérature anglo-saxonne). Ledit au moins un dispositif émetteur 11 est apposé sur un objet positionné dans ledit environnement 20, ici fermé tel qu'illustré par la figure 1. De plus, les dispositifs récepteurs 12, positionnés en différents endroits de l'environnement 20 (représenté en pointillés dans la figure 1), sont configurés pour diffuser de manière continue, ou bien récurrente, au sein dudit environnement 20 un champ électromagnétique selon une fréquence appartenant à une bande de fréquences autorisée par la réglementation locale pour l'utilisation du radio-marqueur, et avec une puissance d'émission par exemple de l'ordre de quelques watts. De telles ondes électromagnétiques sont par exemple une porteuse modulée par technique de sauts de fréquence.

Rien n'exclut cependant, suivant d'autres exemples, d'avoir des dispositifs émetteurs 11 énergétiquement actifs, et comportant respectivement, par exemple, des batteries électriques. Rien n'exclut non plus que le système de localisation sans fil 10 soit d'un autre type, c'est-à-dire avec une bande passante fréquentielle différente de celle d'un système UWB, et que les dispositifs récepteurs 12 diffusent des ondes électromagnétiques, dans le cas de dispositifs émetteurs passifs, selon d'autres fréquences.

Pour la suite de la description, et tel qu'illustré par la figure 1, on se place à titre nullement limitatif dans le cas où le système de localisation sans fil 10 comporte un seul dispositif émetteur 11, cela notamment dans un souci de clarté et d'allègement de la description. Rien n'exclut cependant, suivant d'autres exemples, que le système de localisation comporte plus d'un dispositif émetteur 11.

Dans l'exemple illustré par la figure 1, le système de localisation sans fil 10 comporte aussi quatre dispositifs récepteurs 12. Une telle configuration est avantageusement adaptée à une localisation tridimensionnelle du dispositif émetteur 11, cette localisation étant par exemple effectuée au moyen de calculs de différences d'instants d'arrivée TDOA (acronyme de l'expression anglo-saxonne « Time Différence Of Arrivai ») d'un signal radio émis par le dispositif émetteur 11, pour plusieurs paires de dispositifs récepteurs 12, comme connu de l'homme du métier. Alternativement, lorsque la localisation du dispositif émetteur 11 est bidimensionnelle, l'utilisation de trois dispositifs récepteurs 12 est suffisante.

La figure 2 représente un organigramme d'un exemple de mise en œuvre d'un procédé pour la détection, par un dispositif récepteur 12, d'une impulsion d'un signal reçu par ledit dispositif récepteur 12.

Notons que dans le cas où le système de localisation 10 comporte plusieurs dispositifs récepteurs 12, ledit procédé est mis en œuvre indépendamment par chacun desdits dispositifs récepteurs 12.

Concernant la mise en œuvre dudit procédé de détection, le dispositif récepteur 12 comporte par exemple un circuit de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé de détection d'une impulsion du signal reçu. Alternativement ou en complément, le circuit de traitement du dispositif récepteur 12 comporte un ou des circuits logiques programmables (FGPA, PLD, etc.), et/ou un ou des circuits intégrés spécialisés (ASIC), et/ou un ensemble de composants électroniques discrets, etc., adaptés à mettre en œuvre tout ou partie desdites étapes du procédé pour la détection d'une impulsion du signal reçu.

En d'autres termes, le circuit de traitement du dispositif récepteur 12 comporte un ensemble de moyens configurés de façon logicielle (produit programme d'ordinateur spécifique) et/ou matérielle (FGPA, PLD, ASIC, composants électroniques discrets, etc.) pour mettre en œuvre les étapes du procédé pour la détection d'une impulsion du signal reçu.

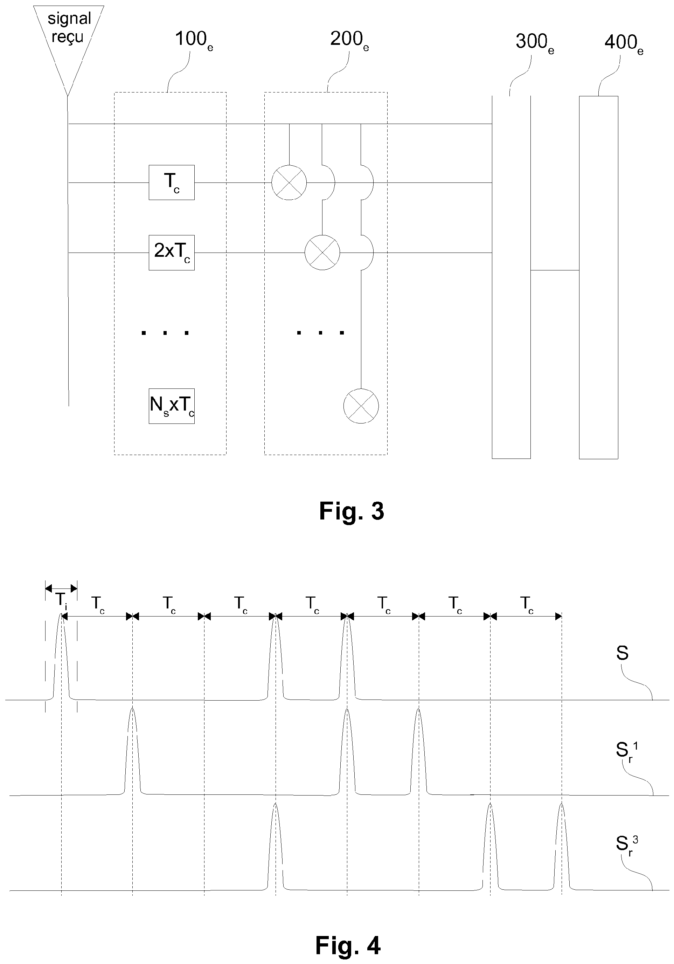

La figure 3 représente schématiquement un exemple d'architecture d'une partie du dispositif récepteur 12, ladite partie étant adaptée à la mise en œuvre du procédé de détection selon l'invention. Tel qu'illustré par la figure 3, cette partie du dispositif 12 comporte un étage de décalage temporel $100_e$, un étage de corrélation $200_e$, un étage de calcul $300_e$ ainsi qu'un étage de détection $400_e$. Les fonctions réalisées respectivement par ces différents étages sont explicitées en détails ci-après avec la description détaillée dudit procédé de détection. Il apparaîtra clairement à l'homme du métier que la figure 3 constitue un exemple illustratif donné à titre nullement limitatif, un tel dispositif récepteur 12 pouvant par exemple aussi comporter, de manière connue, un ou des filtres et/ou un ou des amplificateurs à faible bruit positionnés, par exemple, entre des moyens de réception du signal et l'étage de décalage temporel $100_e$.

Le signal reçu par le dispositif récepteur 12 correspond à des données émises avec une période $T_c$ prédéterminée, chaque donnée étant encodée par une présence ou bien une absence d'impulsion, une impulsion étant de durée $T_i$ prédéterminée. Pour la suite de la description, on note $N_c$ le nombre de données émises.

On comprend donc que, par cette mise en œuvre, la durée $T_i$ d'une impulsion est inférieure à $T_c$, et que deux impulsions successives sont séparées d'une durée égale à $T_c$.

Par exemple, la période $T_c$ d'émission de données est égale à 250 nanosecondes et la durée $T_i$ d'une impulsion est égale à 20 nanosecondes. Rien n'exclut cependant, suivant d'autres exemples non détaillés ici, d'avoir d'autres valeurs pour la période $T_c$ et la durée $T_i$ dès lors que ladite durée $T_i$ reste inférieure à ladite période $T_c$ et est associée à un spectre fréquentiel caractéristique de la technologie UWB.

De plus, une donnée émise est associée à une fenêtre temporelle de durée $T_c$, ladite fenêtre comportant ou non une impulsion selon l'encodage de ladite donnée, et de sorte que la réunion des fenêtres temporelles associées à toutes les données émises couvre la durée totale du signal émis par le dispositif émetteur 11. La fenêtre temporelle d'une donnée comporte un instant de début et un instant de fin, séparé dudit instant de début de la durée $T_c$.

Dans le présent exemple de mise en œuvre, le signal reçu par le dispositif récepteur 12 a préalablement été émis par le dispositif émetteur 11 sous la forme d'un signal radio. Les données sont générées par ledit dispositif émetteur 11 et sont, par exemple, représentatives d'un identifiant unique de ce dernier. Cet identifiant est dès lors destiné à être retrouvé par le dispositif récepteur 12 lors de la réception dudit signal radio, afin notamment d'associer le signal reçu audit dispositif émetteur 11. Par ailleurs, les données émises peuvent être représentées, de manière connue, sous forme de bits prenant des valeurs « 1 » ou bien « 0 » selon qu'ils sont associés respectivement à une présence d'impulsion ou bien une absence d'impulsion. A cet effet, les données sont préférentiellement émises selon une modulation de type « OOK » (acronyme de l'expression anglo-saxonne « On-Off Keying »), connue de l'homme du métier. De cette manière, en comparaison avec l'état de la technique, on constate qu'il n'est pas nécessaire qu'une donnée soit encodée par deux impulsions au niveau du dispositif émetteur 11, si bien que le nombre d'impulsions transmises reste limité. Rien n'exclut cependant, suivant d'autres exemples non détaillés ici, que les impulsions soient générées au moyen d'une modulation différente.

Dans la suite de la description, on adopte la convention selon laquelle les composantes d'un vecteur sont lues de la gauche vers la droite. Des données émises par le dispositif émetteur 11, et reçues par le dispositif récepteur 12, sont représentées par un vecteur, chaque composante dudit vecteur correspondant à une desdites données émises, ledit vecteur étant en outre ordonné de la gauche vers la droite selon les instants d'arrivée croissants des données.

Par exemple, considérons un signal S, émis par le dispositif émetteur 11 et reçu par le dispositif récepteur 12, de sorte que S correspond aux données émises (1,0,0,1,1). Dans ce cas, la première donnée émise est encodée par une présence d'impulsion, la deuxième donnée émise est encodée par une absence d'impulsion, etc, et la durée du signal S est égale à $5 \times Tc$.

Il convient aussi de noter que le dispositif récepteur 12 fonctionne au-delà de la durée du signal reçu, c'est-à-dire avant et après réception de ce dernier. Dès lors, en dehors de la réception du signal correspondant aux données émises par le dispositif émetteur 11, le dispositif récepteur 12 ne reçoit aucun signal, si ce n'est éventuellement du bruit résiduel d'amplitude sensiblement nulle.

Dans un mode particulier de mise en œuvre, les données émises par le dispositif émetteur 11 sont préalablement générées par une séquence d'étalement modulée par un paquet de pré-données. Une telle manière de procéder a pour effet d'augmenter la fréquence de chaque pré-donnée du paquet, produisant ainsi dans le domaine fréquentiel un étalement du spectre d'un signal correspondant au seul paquet de pré-donnée. Une telle manière de procéder, généralement désignée par l'expression « étalement de spectre par séquence directe », ainsi que les avantages qui en découlent, sont bien connus de l'homme du métier.

A titre d'exemple nullement limitatif, la séquence d'étalement est une séquence pseudo-aléatoire, encore dite séquence « PRN » (acronyme de l'expression anglo-saxonne « Pseudo Random Noise »). Par exemple, ladite séquence pseudo-aléatoire est une séquence binaire de type m-séquence. Rien n'exclut cependant, suivant d'autres exemples, d'avoir une séquence pseudo-aléatoire d'un autre type comme une séquence dite « Gold », ou dite de « Barker », ou dite de « Hadamard-Walsh », etc.

De manière connue de l'homme de l'art, le signal obtenu après encodage des données par l'absence ou la présence d'impulsion module, avant émission, une fréquence porteuse dans le but de transporter l'information contenue dans ledit signal obtenu. De manière analogue, le signal reçu par le dispositif récepteur 12 peut être démodulé relativement à ladite fréquence porteuse. Une telle manière de procéder n'est pas décrite en détail ici pour des raisons de simplicité et de clarté d'écriture. En outre, le signal reçu par le dispositif récepteur 12 peut être sensiblement différent du signal radio émis par le dispositif émetteur 11 en ce qu'il a éventuellement subi des distorsions lors de sa transmission. Néanmoins, si ces distorsions peuvent affecter sensiblement la forme des impulsions transmises, les impulsions reçues par le dispositif émetteur restent néanmoins de durées respectives sensiblement égales à $T_i$, et associées à des données de période $T_c$.

Pour générer le signal radio émis, le dispositif émetteur 11 comporte, par exemple, un circuit de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé d'estimation de l'instant d'arrivée du signal radio. Alternativement ou en complément, le circuit de traitement du dispositif émetteur 11 comporte un ou des circuits logiques programmables (FGPA, PLD, etc.), et/ou un ou des circuits intégrés spécialisés (ASIC), et/ou un ensemble de composants électroniques discrets, etc., adaptés à générer le signal radio émis.

En d'autres termes, le circuit de traitement du dispositif émetteur 11 comporte un ensemble de moyens configurés de façon logicielle (produit programme d'ordinateur spécifique) et/ou matérielle (FGPA, PLD, ASIC, composants électroniques discrets, etc.) pour mettre en œuvre les étapes du procédé de détection d'impulsions.

Dès lors, le procédé de détection, par le dispositif récepteur 12, d'impulsions du signal reçu comporte plusieurs étapes successives. Dans son principe général, ledit procédé consiste tout d'abord à générer des signaux retardés en nombre limité, sur la base du signal reçu. Ces signaux retardés sont ensuite corrélés avec le signal reçu afin d'obtenir des valeurs de corrélation en un instant candidat. A partir de ces valeurs de corrélation, il est alors possible de décider si ledit instant candidat est associé à une présence d'impulsion ou bien à une absence d'impulsion. En comparaison avec l'état de l'art, ce procédé a pour objectif de permettre une détection précise et robuste des impulsions, sans qu'il soit nécessaire d'accroître le nombre d'impulsions transmises par le dispositif émetteur 11.

Par « instant candidat », on fait référence ici à un instant en lequel le dispositif récepteur 12 cherche à déterminer si le signal reçu comporte une impulsion. Ce point est explicité plus en détails ultérieurement, notamment en ce qui concerne la détermination d'un instant candidat.

A cet effet, le procédé de détection comporte dans un premier temps une étape 100 de décalage temporel du signal reçu selon un nombre prédéterminé $N_s$ de retards correspondant à des multiples différents de $T_c$, de sorte à générer $N_s$ signaux retardés.

On comprend donc que les $N_s$ signaux retardés sont générés par le dispositif récepteur 12 dès que le signal émis par le dispositif émetteur 11 est reçu par ledit dispositif récepteur 12. Ces signaux retardés présentent tous une forme identique à celle du signal reçu. Le fait que ces signaux retardés soient générés au cours de l'étape 100 par le dispositif récepteur 12 permet avantageusement d'utiliser le signal reçu comme signal de référence pour des étapes ultérieures du procédé de détection, notamment pour une corrélation du signal reçu avec les signaux retardés. En procédant de la sorte, on comprend aussi que le signal émis (plus particulièrement le train d'impulsions émises) n'est pas utilisé comme signal de référence.

La figure 4 illustre schématiquement un signal reçu ainsi que des signaux retardés. Dans l'exemple illustré par la figure 4, à titre nullement limitatif, on considère un signal S admettant la représentation (1,0,0,1,1), ainsi qu'un premier retard $R_1$ égal à $T_c$, et un deuxième retard $R_3$ égal à $3 \times T_c$. Alors le signal retardé obtenu après décalage temporel du signal S selon ledit premier retard $R_1$ admet pour représentation $S_r^1 = (0,1,0,0,1,1)$. De manière identique, le signal retardé obtenu après décalage temporel du signal S selon ledit deuxième retard $R_3$ admet pour représentation $S_r^3 = (0,0,0,1,0,0,1,1)$. De tels signaux peuvent être aussi représentés par exemple au moyen d'une matrice M s'écrivant :

$$M = \begin{pmatrix} 1 & 0 & 0 & 1 & 1 & 0 & 0 \\ 0 & 1 & 0 & 0 & 1 & 1 & 0 \\ 0 & 0 & 1 & 0 & 0 & 1 & 1 \end{pmatrix}$$

de sorte que les première, deuxième et troisième lignes de la matrice M correspondent respectivement à $S$, $S_r^1$ et $S_r^3$.

Le procédé de détection comporte ensuite une étape 200 de corrélation, au niveau d'un instant candidat, du signal reçu avec chacun des signaux retardés, de sorte à obtenir $N_s$ valeurs de corrélation associées audit instant candidat.

Un instant candidat correspond ainsi à un instant en lequel on cherche à déterminer si le signal reçu comporte une impulsion par corrélation dudit signal reçu avec les signaux retardés. La corrélation, en un instant candidat, du signal reçu avec un signal retardé s'effectue ici de manière connue en soi, c'est-à-dire par multiplication complexe conjuguée puis intégration sur une durée prédéterminée, par exemple sensiblement égale à $T_i$, de sorte à fournir un résultat (une valeur complexe) qui, une fois pris en module, est égal à la valeur de corrélation associée audit instant candidat ainsi qu'audit signal retardé considéré. Par conséquent, une valeur de corrélation est ici un nombre réel.

On comprend qu'une disposition avantageuse consisterait à avoir un dispositif récepteur 12 exécutant une corrélation au début de chaque fenêtre temporelle d'une donnée, pendant une durée sensiblement égale à $T_i$ et sous l'hypothèse que, lorsqu'une donnée encode une impulsion, cette impulsion démarre à l'instant de début de la fenêtre temporelle associée à ladite donnée.

Cela étant, il convient de noter que le dispositif récepteur 12 ne dispose d'aucune connaissance a priori sur le moment de réception du signal émis. C'est pourquoi, le dispositif récepteur 12 exécute des corrélations de manière récurrente, selon une période prédéterminée, et les instants en lesquels ces corrélations sont exécutées correspondent à des instants candidats.

Rien n'exclut cependant, suivant d'autres exemples non détaillés ici, qu'une impulsion encodant une donnée soit positionnée dans la fenêtre temporelle associée à ladite donnée de sorte qu'elle débute à un instant différent de l'instant de début de ladite fenêtre temporelle, auquel cas il y aurait un avantage, suivant les modalités décrites ci-avant, à ce que le dispositif récepteur 12 exécute une corrélation au début de chaque impulsion pendant une durée sensiblement égale à $T_i$.

Pour la suite de la description, on adopte la convention selon laquelle des instants candidats forment un ensemble discret dans lequel deux instants successifs sont séparés par une durée $T_c$. De cette manière, chaque donnée est associée à un seul instant candidat. De préférence, on considère aussi qu'une impulsion débute en un instant candidat.

Typiquement, une valeur de corrélation en un instant candidat, obtenue lors de l'étape 200, est :

- soit sensiblement nulle : cette possibilité correspond à une corrélation, en ledit instant candidat, entre une première donnée du signal reçu et une deuxième donnée d'un signal retardé, la première donnée et/ou la deuxième donnée étant encodées par un bit de valeur 0. Dès lors, cette valeur de corrélation est associée à une absence d'impulsion ;
- soit sensiblement égale à l'énergie contenue dans une impulsion : cette possibilité correspond à une corrélation, en ledit instant candidat, entre une première donnée du signal reçu et une deuxième donnée d'un signal retardé, la première donnée et la deuxième donnée étant respectivement encodées par un bit de valeur 1. Dès lors, cette valeur de corrélation est associée à une présence d'impulsion. Notons que la valeur de corrélation peut être sensiblement différente de l'énergie théoriquement contenue dans une impulsion générée par le dispositif émetteur 11 en raison de distorsions subies au cours de la transmission du signal. Une telle disposition ne gêne en rien la mise en œuvre de l'invention telle qu'exposée.

A titre d'exemple nullement limitatif, considérons un signal S admettant la représentation (1,0,0,1,1), ainsi qu'un signal retardé $S_r^1 = (0,1,0,0,1,1)$ obtenu après décalage temporel du signal S selon un retard $R_1$ égal à $T_c$. Ces signaux peuvent être représentés par le matrice M telle que

$$M = \begin{pmatrix} 1 & 0 & 0 & 1 & 1 & 0 \\ 0 & 1 & 0 & 0 & 1 & 1 \end{pmatrix}$$

de sorte que les première et deuxième lignes de la matrice M correspondent respectivement à $S$ et $S_r^1$. Alors, la valeur de corrélation obtenue en l'instant candidat initial de $S$, après corrélation avec ledit signal retardé, est sensiblement nulle. Il en est de même des deuxième, troisième et quatrième instants candidats de $S$. La valeur de corrélation du cinquième instant candidat de $S$ est, quant à elle, sensiblement égale à l'énergie contenue dans une impulsion. Enfin, les valeurs de corrélation obtenues au-delà du cinquième instant candidat sont toutes sensiblement nulles.

Il importe de noter que la mise en œuvre de l'étape 200 ne permet pas de détecter la première impulsion du signal reçu. En effet, par définition même de ladite première impulsion, le dispositif récepteur 12 perçoit un signal d'amplitude sensiblement nulle (autrement dit une suite de bits de valeurs respectives 0) avant la réception de ladite première impulsion. Dès lors, la valeur de corrélation obtenue un instant candidat positionné au cours de ladite première impulsion, par corrélation du signal reçu avec l'un quelconque des signaux retardés, sera toujours sensiblement nulle, de sorte qu'aucune impulsion ne peut être détectée. Il convient toutefois de préciser que le fait que la première impulsion du signal reçu ne puisse être détectée ne nuit pas à la localisation du dispositif récepteur 11. En effet, le nombre de données émises par ce dernier est élevé, typiquement supérieur à 1000, si bien que même si la première impulsion n'est pas détectée, la détection de toutes les autres impulsions émises permet une identification robuste de l'identifiant du dispositif récepteur 11.

Le procédé de détection comporte ensuite une étape 300 de calcul d'une valeur maximale de corrélation parmi les $N_s$ valeurs de corrélation associées à l'instant candidat.

Dans son principe, cette étape 300 consiste à déterminer en l'instant candidat une valeur maximale de corrélation qui représente alors la base d'un critère de décision quant à la présence ou non d'une impulsion en ledit instant candidat. En effet, détecter une impulsion en un instant candidat revient à détecter une énergie en cet instant, ce qui s'apprécie au regard des valeurs de corrélation associées audit instant.

Pour déterminer la valeur maximale de corrélation associée à un instant candidat, on peut regrouper les différentes valeurs de corrélation associées audit instant candidat au sein d'un ensemble, puis déterminer le maximum de cet ensemble. La détermination d'un tel maximum s'effectue au moyen d'algorithmes bien connus de l'homme du métier.

Le procédé de détection comporte finalement une étape 400 de détection d'une impulsion du signal reçu en fonction de ladite valeur maximale de corrélation.

Ainsi, dans un mode particulier de mise en œuvre, l'étape 400 comporte, en l'instant candidat, une comparaison de la valeur maximale de corrélation associée audit instant candidat avec une valeur seuil prédéterminée, de sorte qu'une impulsion est détectée en ledit instant candidat lorsque la valeur maximale de corrélation dudit instant candidat est supérieure à ladite valeur seuil prédéterminée. Par exemple, ladite valeur seuil est choisie de sorte à être inférieure ou égale à l'énergie d'une impulsion (une telle énergie étant connue dans la mesure où les impulsions du système de localisation sont générées au moyen d'une modulation déterminée), ainsi que supérieure à l'énergie du bruit résiduel capté par le dispositif récepteur 12. Procéder de la sorte permet avantageusement d'éviter d'identifier du bruit résiduel comme une impulsion et d'établir un critère de décision quant à la présence ou non d'une impulsion en un instant candidat.

Plaçons-nous désormais dans le cas où deux instants candidats consécutifs peuvent être séparés par une durée différente de $T_c$. Alors, dans un mode particulier de mise en œuvre du procédé de détection d'une impulsion, le signal reçu est corrélé, au cours de l'étape 200, avec chacun des signaux retardés au niveau de plusieurs instants candidats de sorte à obtenir $N_s$ valeurs de corrélation associées à chaque instant candidat. Puis, la valeur maximale de corrélation est calculée, au cours de l'étape 300, parmi les valeurs de corrélation associées auxdits instants candidats.

Ainsi, si la valeur maximale de corrélation calculée est telle qu'elle conduit à une détection d'impulsion au cours de l'étape 400, alors on en déduit que ladite impulsion est positionnée dans le signal reçu au niveau de l'instant candidat associé à ladite valeur maximale de corrélation.

Notons $N_i$ le nombre d'instants candidats considérés pour détecter une impulsion. Selon le présent mode de mise en œuvre, on obtient donc un nombre de valeurs de corrélation égal à $N_s \times N_i$. On comprend ainsi que chercher la valeur maximale de corrélation est équivalent à la recherche du maximum d'un tableau de valeurs, comportant $N_s$ lignes et $N_i$ colonnes, et donc de taille égale à $N_s \times N_i$. La détermination d'un tel maximum s'effectue au moyen d'algorithmes bien connus de l'homme du métier. Par exemple, une valeur maximale de corrélation est calculée pour chaque instant candidat, parmi les $N_s$ valeurs de corrélation associées audit instant candidat considéré. On obtient ainsi $N_i$ valeurs maximales de corrélation respectivement associées auxdits $N_i$ instants candidats. Puis une impulsion est détectée en fonction desdites $N_i$ valeurs maximales de corrélation, par exemple en calculant le maximum desdites $N_i$ valeurs maximales de corrélation.

Procéder de cette manière est avantageux car cela permet de prendre en compte une pluralité d'instants candidats au sein de chaque fenêtre temporelle associée à une donnée. Ainsi on évite des configurations dans lesquelles il n'y a qu'un seul instant candidat par fenêtre temporelle d'une donnée (par exemple si deux instants candidats consécutifs sont séparés d'une durée $T_c$) et où l'instant candidat associé à une fenêtre temporelle d'une donnée est à chaque fois positionné en dehors de la durée $T_i$ d'une impulsion, si ladite fenêtre comporte effectivement une impulsion. Dit encore autrement, il s'agit donc, dans ce mode particulier de mise en œuvre, d'augmenter le nombre de corrélations effectuées dans une fenêtre temporelle associée à une donnée de sorte à, d'une part, augmenter la probabilité de détecter une impulsion dans cette fenêtre temporelle, et d'autre part, déterminer avec précision la position d'une impulsion.

Dans un mode particulier de mise en œuvre, les instants candidats considérés comportent un instant initial et un instant final, et la différence entre l'instant final et l'instant initial est comprise entre $T_c/2$ et $3 \times T_c/2$. Le nombre d'instants candidats compris entre lesdits instants initial et final dépend de la durée séparant deux instants candidats consécutifs. Par exemple, ladite différence est sensiblement égale à $T_c$ et la durée entre deux instants candidats consécutifs est égale à Tc/9 si bien que le nombre $N_i$ d'instants candidats considérés est égal à 10.

Comme évoqué ci-avant, pour qu'une impulsion soit détectée en un instant candidat, s'il y a effectivement lieu de détecter une impulsion en cet instant candidat, il est nécessaire que la donnée du signal reçu associée audit instant candidat soit corrélée avec une donnée d'un signal retardé encodant elle aussi une impulsion, de sorte à générer au moins une valeur de corrélation supérieure audit seuil prédéterminé (ce qui implique que la valeur maximale de corrélation associée audit instant candidat est aussi supérieure audit seuil prédéterminé).

En outre, dans la mesure où la présence d'une impulsion en un instant candidat n'est pas une information connue du dispositif récepteur 12 lors de la réception du signal, on comprend que si une valeur de corrélation est sensiblement nulle, après corrélation en un instant candidat entre une première donnée du signal reçu et une deuxième donnée d'un signal retardé, il n'est pas possible de connaître a priori laquelle desdites première et deuxième données est encodée par un bit de valeur 0.

C'est pourquoi, pour détecter de manière précise et certaine les impulsions du signal reçu, il convient non seulement de corréler ledit signal reçu avec un nombre suffisant de signaux retardés, mais aussi que les retards de ces signaux retardés soient déterminés de manière appropriée.

A cet effet, dans un mode préféré de mise en œuvre, lorsque deux données encodant respectivement des présences d'impulsions sont séparées par au plus $N_m$ données encodant respectivement des absences d'impulsions, le nombre $N_s$ de signaux retardés est compris dans l'intervalle $[N_m+1,N_c-1]$, les retards respectifs desdits signaux retardés étant déterminés par

$$R_j = j \times T_c,$$

avec j un nombre entier compris dans l'intervalle $[1,N_s]$.

Lorsque le nombre $N_s$ de signaux retardés est par exemple égal à $N_c-1$, on génère autant de signaux retardés que de données contenues dans le signal reçu au-delà de la première donnée dudit signal reçu, ce qui permet de détecter de manière certaine les impulsions dudit signal reçu. En effet, toutes les données du signal reçu encodées par une impulsion, et émises après la première impulsion dudit signal reçu, seront nécessairement corrélées avec ladite première impulsion du signal. Procéder ainsi constitue donc une manière robuste et précise d'identifier les impulsions du signal reçu par le dispositif récepteur 12.

En outre, il n'est pas nécessaire que $N_s$ soit égal à $N_c-1$ pour être sûr de détecter les impulsions du signal reçu. En effet, pour assurer une détection certaine des impulsions, il suffit qu'une donnée encodée par une impulsion soit corrélée, en l'instant candidat qui lui est associé, avec un nombre suffisant de signaux retardés de sorte qu'au moins une des valeurs de corrélation associées à cette donnée soit obtenue par corrélation de ladite donnée avec une autre donnée encodée de façon certaine par une impulsion. Dès lors, si on génère un nombre de signaux retardés au moins égal à $N_m+1$, la détection certaine des impulsions est assurée puisque quelque soit la donnée qu'on cherche à identifier, on est certain qu'elle sera corrélée au cours du procédé de détection par au moins une autre donnée encodée par une impulsion.

Afin d'illustrer ce mode préféré de mise en œuvre, considérons un signal reçu S prenant la forme (1,1,0,1,0,0,1). On observe alors que dans ce cas $N_m$ est égal à 2. Plaçons-nous dans la situation où on cherche à détecter spécifiquement la septième donnée du signal $S$, qui est donc ici encodée par une impulsion vu qu'elle est représentée par un bit de valeur 1. Soit donc des signaux retardés $S_r^1$, $S_r^2$ et $S_r^3$ correspondant à des décalages temporels du signal $S$ selon des retards respectivement égaux à $R_1$, $R_2$ et $R_3$. Autrement dit :

$$S_r^1 = (0,1,1,0,1,0,0,1),$$

$$S_r^2 = (0,0,1,1,0,1,0,0,1),$$

$$S_r^3 = (0,0,0,1,1,0,1,0,0,1).$$

Ces signaux peuvent être représentés par le matrice M telle que

$$M = \begin{pmatrix} 1 & 1 & 0 & 1 & 0 & 0 & 1 & 0 & 0 & 0 \\ 0 & 1 & 1 & 0 & 1 & 0 & 0 & 1 & 0 & 0 \\ 0 & 0 & 1 & 1 & 0 & 1 & 0 & 0 & 1 & 0 \\ 0 & 0 & 0 & 1 & 1 & 0 & 1 & 0 & 0 & 1 \end{pmatrix}$$

de sorte que les première, deuxième, troisième et quatrième lignes de la matrice M correspondent respectivement à $S$, $S_r^1$, $S_r^2$ et $S_r^3$.

On constate alors que la corrélation entre le signal reçu S et le signal retardé $S_r^1$, en le septième instant candidat, ne permet pas de détecter l'impulsion associée à la septième donnée du signal S dans la mesure où la valeur de corrélation obtenue est sensiblement nulle (la septième donnée du signal $S_r^1$ étant encodée par une absence d'impulsion, soit un bit de valeur 0). Ces arguments s'appliquent tout autant concernant la corrélation entre le signal reçu $S$ et le signal retardé $S_r^2$. Par contre, la corrélation entre le signal reçu $S$ et le signal retardé $S_r^3$, en le septième instant candidat, permet bien, quant à elle, de détecter l'impulsion associée à la septième donnée du signal $S$ dans la mesure où la valeur de corrélation obtenue est sensiblement égale à l'énergie d'une impulsion (la septième donnée du signal $S_r^3$ étant encodée par une présence d'impulsion, soit un bit de valeur 1).

Il apparait aussi sur cet exemple que la corrélation entre le signal $S$ et des signaux retardés $S_r^j$ avec j appartenant à l'intervalle [1,6], correspondant respectivement à des décalages temporels du signal $S$ selon un retard égal à $R_j$, permet de détecter toutes les impulsions situées au-delà de la première impulsion dudit signal $S$. Toutefois, il n'est pas nécessaire de générer la totalité de ces signaux, ni même d'ailleurs des signaux retardés avec des retards supérieurs à $R_3$, dans la mesure où l'utilisation desdits signaux $S_r^1$, $S_r^2$ et $S_r^3$, selon la présente invention, suffit à obtenir une détection certaines des impulsions du signal. A cet effet, préférentiellement, le nombre $N_s$ de signaux retardés est égal à $N_m+1$. Cette mise en œuvre préférentielle est particulièrement avantageuse dans la mesure où elle limite le nombre de signaux retardés générés par le dispositif récepteur 12, de sorte à en simplifier la conception notamment lorsque le nombre $N_m$ est petit devant le nombre $N_c$.

Notons que ce mode préféré de mise en œuvre trouve une application particulièrement avantageuse dans une configuration où on ne connait pas, à l'émission, l'emplacement des impulsions dans le signal mais où on dispose tout de même de l'information relative audit nombre $N_m$ de données, ce qui est typiquement le cas lorsque les données sont générées par le dispositif émetteur 11 en modulant une séquence d'étalement.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un système de localisation sans fil UWB. Rien n'exclut cependant, suivant d'autres exemples, de considérer d'autres types de systèmes de communication. L'invention trouve cependant une application particulièrement avantageuse dans les systèmes de communication sans fil à bande ultra large, c'est-à-dire dont la bande passante absolue (à -10 dB par rapport à la puissance mesurée sur la fréquence centrale) est supérieure à 500 mégahertz.

## Revendications

**1.** Procédé pour la détection, par un dispositif récepteur (12), d'une impulsion d'un signal reçu par ledit dispositif récepteur (12), ledit signal reçu correspondant à des données émises avec une période $T_c$ prédéterminée, chaque donnée étant encodée par une présence ou une absence d'au plus une impulsion, ledit procédé comportant les étapes suivantes :

    - une étape (100) de décalage temporel du signal reçu selon un nombre prédéterminé $N_s$ de retards correspondant à des multiples différents de $T_c$, de sorte à générer $N_s$ signaux retardés,
    - une étape (200) de corrélation, au niveau d'un instant candidat pour la détection d'une impulsion, du signal reçu avec chacun des signaux retardés, de sorte à obtenir $N_s$ valeurs de corrélation associées audit instant candidat,
    - une étape (300) de calcul d'une valeur maximale de corrélation parmi les $N_s$ valeurs de corrélation associées à l'instant candidat,
    - une étape (400) de détection d'une impulsion du signal reçu en fonction de ladite valeur maximale de corrélation.

**2.** Procédé selon la revendication 1, dans lequel le nombre de données est égal à $N_c$ et dans lequel deux données encodant respectivement des présences d'impulsions sont séparées par au plus $N_m$ données encodant respectivement des absences d'impulsions, le nombre $N_s$ de signaux retardés est compris dans l'intervalle $[N_m+1,N_c-1]$ et les retards respectifs desdits signaux retardés sont déterminés par

$$R_j = j \times T_c,$$

avec j un nombre entier compris dans l'intervalle $[1,N_s]$.

**3.** Procédé selon la revendication 2, dans lequel le nombre $N_s$ de signaux retardés est égal à $N_m+1$.

**4.** Procédé selon l'une des revendications 1 à 3, dans lequel l'étape (400) de détection d'impulsions du signal reçu comporte une comparaison de la valeur maximale de corrélation associée audit instant candidat avec une valeur seuil prédéterminée, de sorte qu'une impulsion est détectée en ledit instant candidat lorsque la valeur maximale de corrélation dudit instant candidat est supérieure à ladite valeur seuil prédéterminée.

**5.** Procédé selon l'une des revendications 1 à 4, dans lequel :

    - le signal reçu est corrélé avec chacun des signaux retardés au niveau de plusieurs instants candidats de sorte à obtenir $N_s$ valeurs de corrélation associées à chaque instant candidat,
    - la valeur maximale de corrélation est calculée parmi les valeurs de corrélation associées auxdits instants candidats.

**6.** Procédé selon l'une des revendications 1 à 4, dans lequel :

    - le signal reçu est corrélé avec chacun des signaux retardés au niveau de plusieurs instants candidats de sorte à obtenir $N_s$ valeurs de corrélation associées à chaque instant candidat,
    - une valeur maximale de corrélation est calculée pour chaque instant candidat, parmi les $N_s$ valeurs de corrélation associées audit instant candidat considéré,
    - une impulsion est détectée en fonction desdites valeurs maximales de corrélation.

**7.** Procédé selon l'une des revendications 5 à 6, dans lequel les instants candidats considérés comportent un instant initial et un instant final, et la différence entre l'instant final et l'instant initial est comprise entre $T_c/2$ et $3 \times T_c/2$.

**8.** Dispositif récepteur (12) pour la détection d'une impulsion d'un signal reçu par ledit dispositif récepteur (12), ledit signal reçu correspondant à des données émises avec une période $T_c$ prédéterminée, chaque donnée étant encodée par une présence ou une absence d'au plus une impulsion, ledit dispositif récepteur (12) comportant :

    - des moyens configurés pour décaler temporellement le signal reçu selon un nombre prédéterminé $N_s$ de retards correspondant à des multiples différents de $T_c$, de sorte à générer $N_s$ signaux retardés,
    - des moyens configurés pour corréler, au niveau d'un instant candidat pour la détection d'une impulsion, le signal reçu avec chacun des signaux retardés, de sorte à obtenir $N_s$ valeurs de corrélation associées audit instant candidat,
    - des moyens configurés pour calculer une valeur maximale de corrélation parmi les $N_s$ valeurs de corrélation

associées à l'instant candidat,
- des moyens configurés pour détecter une impulsion du signal reçu en fonction de ladite valeur maximale de corrélation.

9. Dispositif récepteur (12) selon la revendication 8, **caractérisé en ce que** le nombre de données est égal à $N_c$ et **en ce que** deux données encodant respectivement une présence d'impulsion sont séparées par au plus $N_m$ données encodant respectivement une absence d'impulsion, le nombre $N_s$ de signaux retardés est compris dans l'intervalle $[N_m+1, N_c-1]$ et les retards respectifs desdits signaux retardés sont déterminés par

$$R_j = j \times T_c,$$

avec j un nombre entier compris dans l'intervalle $[1, N_s]$.

10. Dispositif récepteur (12) selon la revendication 9, **caractérisé en ce que** le nombre $N_s$ de signaux retardés est égal à $N_m+1$.

11. Dispositif récepteur (12) selon l'une des revendications 8 à 10, **caractérisé en ce qu'**il comporte des moyens configurés pour comparer la valeur maximale de corrélation associée audit instant candidat avec une valeur seuil prédéterminée, de sorte qu'une impulsion est détectée en ledit instant candidat lorsque la valeur maximale de corrélation dudit instant candidat est supérieure à ladite valeur seuil prédéterminée.

12. Dispositif récepteur (12) selon l'une des revendications 8 à 11, **caractérisé en ce qu'**il comporte :

    - des moyens configurés pour corréler le signal reçu avec chacun des signaux retardés au niveau de plusieurs instants candidats de sorte à obtenir $N_s$ valeurs de corrélation associées à chaque instant candidat,
    - des moyens configurés pour calculer la valeur maximale de corrélation parmi les valeurs de corrélation associées auxdits instants candidats.

13. Dispositif récepteur (12) selon l'une des revendications 8 à 11, **caractérisé en ce qu'**il comporte :

    - des moyens configurés pour corréler le signal reçu avec chacun des signaux retardés au niveau de plusieurs instants candidats de sorte à obtenir $N_s$ valeurs de corrélation associées à chaque instant candidat,
    - des moyens configurés pour calculer une valeur maximale de corrélation pour chaque instant candidat, parmi les $N_s$ valeurs de corrélation associées audit instant candidat considéré,
    - des moyens configurés pour détecter une impulsion en fonction desdites valeurs maximales de corrélation.

14. Dispositif récepteur (12) selon l'une des revendications 12 à 13, **caractérisé en ce que** les instants candidats considérés comportent un instant initial et un instant final, et la différence entre l'instant final et l'instant initial est comprise entre $T_c/2$ et $3 \times T_c/2$.

**Patentansprüche**

1. Verfahren zur Detektion eines Pulses eines von einer Empfängervorrichtung (12) empfangenen Signals durch die genannte Empfängervorrichtung (12), wobei das genannte empfangene Signal Daten entspricht, die mit einer vorbestimmten Periode $T_c$ empfangen werden, wobei jedes Datenelement durch ein Vorhandensein oder ein Fehlen wenigstens eines Impulses kodiert wird, wobei das genannte Verfahren die folgenden Schritte umfasst:

    - einen zeitlichen Versetzungsschritt des empfangenen Signals gemäß einer vorbestimmten Anzahl $N_s$ von Verzögerungen, die zahlreichen unterschiedlichen $T_c$ derart entsprechen, dass $N_s$ verzögerte Signale erzeugt werden,
    - einen Korrelationsschritt (200) des empfangenen Signals mit jedem der verzögerten Signale zu einem Kandidaten-Moment für die Detektion eines Pulses ist, derart, dass $N_s$ dem genannten Kandidaten-Moment zugeordnete Korrelationswerte erhalten werden,
    - einen Berechnungsschritt (300) eines maximalen Korrelationsschrittes von den $N_s$ dem Kandidaten-Moment zugeordneten Korrelationsschritten,
    - einen Detektionsschritt (400) eines Pulses des in Abhängigkeit von dem genannten maximalen Korrelationswert empfangenen Signals.

2. Verfahren gemäß Anspruch 1, bei dem die Anzahl von Daten gleich $N_c$ ist und bei dem zwei Daten, die jeweils vorhandene Pulse kodieren, durch maximal $N_m$ Daten getrennt sind, die jeweils fehlende Pulse kodieren, die Anzahl von $N_s$ verzögerten Signalen in dem Intervall $[N_m+1, N_c-1]$ inbegriffen ist und die jeweiligen Verzögerungen der genannten Signale bestimmt werden durch

$$R_j = j \times T_c,$$

wobei j eine ganze Zahl ist, die in dem Intervall $[1,N_s]$ inbegriffen ist.

3. Verfahren gemäß Anspruch 2, bei dem die Anzahl $N_s$ von verzögerten Signalen gleich $N_m+1$ ist.

4. Verfahren gemäß einem der Ansprüche 1 bis 3, bei dem der Schritt (400) der Pulsdetektion des empfangenen Signals einen Vergleich des maximalen Korrelationswertes umfasst, der dem genannten Kandidaten-Moment mit einem vorbestimmten Grenzwert derart zugeordnet ist, dass ein Puls in dem genannten Kandidaten-Moment detektiert wird, wenn der maximale Korrelationswert des genannten Kandidaten-Moments größer ist als der genannte vorbestimmte Grenzwert.

5. Verfahren gemäß einem der Ansprüche 1 bis 4, bei dem:

    - das empfangene Signal mit jedem der in mehreren Kandidaten-Momenten verzögerten Signale derart korreliert wird, dass $N_s$ jedem Kandidaten-Moment zugeordnete Korrelationswerte erhalten werden,
    - der maximale Korrelationswert aus den den genannten Kandidaten-Momenten zugeordneten Korrelationswerten berechnet wird.

6. Verfahren gemäß einem der Ansprüche 1 bis 4, bei dem:

    - das empfangene Signal mit jedem der in mehreren Kandidaten-Momenten verzögerten Signale derart korreliert wird, dass $N_s$ jedem Kandidaten-Moment zugeordnete Korrelationswerte erhalten werden,
    - ein maximaler Korrelationswert für jeden Kandidaten-Moment aus den $N_s$ Korrelationswerten berechnet wird, die dem genannten, betrachteten Kandidaten-Moment zugeordnet sind,
    - ein Puls in Abhängigkeit von den genannten maximalen Korrelationswerten detektiert wird.

7. Verfahren gemäß einem der Ansprüche 5 bis 6, bei dem die betrachteten Kandidaten-Momente einen Anfangsmoment und einen Endmoment umfassen und die Differenz zwischen dem Anfangsmoment und dem Endmoment zwischen $T_c/2$ und $3 \times T_c/2$ inbegriffen ist.

8. Empfängervorrichtung (12) für die Detektion eines Pulses eines von der genannten Empfängervorrichtung (12) empfangenen Signals, wobei das genannte empfangene Signal Daten entspricht, die mit einer vorbestimmten Periode $T_c$ empfangen werden, wobei jedes Datenelement durch ein Vorhandensein oder ein Fehlen wenigstens eines Pulses kodiert wird, wobei die genannte Empfängervorrichtung (12) umfasst:

    - Mittel, die zum zeitlichen Versetzen des empfangenen Signals gemäß einer vorbestimmten Anzahl $N_s$ von Verzögerungen, die zahlreichen unterschiedlichen $T_c$ derart entsprechen, dass $N_s$ verzögerte Signale erzeugt werden, ausgestaltet sind,
    - Mittel, die zum Korrelieren des empfangenen Signals mit jedem der verzögerten Signale zu einem Kandidaten-Moment für die Detektion eines Impulses ausgestaltet sind, derart, dass $N_s$ dem genannten Kandidaten-Moment zugeordnete Korrelationswerte erhalten werden,
    - Mittel, die zum Berechnen eines maximalen Korrelationswertes von den $N_s$ dem Kandidaten-Moment zugeordneten Korrelationsschritten ausgestaltet sind,
    - Mittel, die zum Detektieren eines Pulses des in Abhängigkeit von dem genannten maximalen Korrelationswert empfangenen Signals ausgestaltet sind.

9. Empfängervorrichtung (12) gemäß Anspruch 8, **dadurch gekennzeichnet, dass** die Anzahl von Daten gleich $N_c$ ist und dass zwei Daten, die jeweils vorhandene Pulse kodieren, durch maximal $N_m$ Daten getrennt sind, die jeweils fehlende Pulse kodieren, die Anzahl von $N_s$ verzögerten Signalen in dem Intervall $[N_m+1,N_c-1]$ inbegriffen ist und die jeweiligen Verzögerungen der genannten verzögerten Signale bestimmt werden durch

$$R_j = j \times T_c,$$

wobei j eine ganze Zahl ist, die in dem Intervall $[1,N_s]$ inbegriffen ist.

10. Empfängervorrichtung (12) gemäß Anspruch 9, **dadurch gekennzeichnet, dass** die Anzahl $N_s$ von verzögerten Signalen gleich $N_m+1$ ist.

11. Empfängervorrichtung (12) gemäß einem der Ansprüche 8 bis 10, **dadurch gekennzeichnet, dass** sie Mittel umfasst, die ausgestaltet sind, um den maximalen Korrelationswert, der dem genannten Kandidaten-Moment derart zugeordnet ist, dass ein Impuls in dem genannten Kandidaten-Moment detektiert wird, wenn der maximale Korrelationswert des genannten Kandidaten-Moments größer ist als der genannte vorbestimmte Grenzwert, mit einem vorbestimmten Grenzwert zu vergleichen.

12. Empfängervorrichtung (12) gemäß einem der Ansprüche 8 bis 11, **dadurch gekennzeichnet, dass** sie umfasst:

- Mittel, die zum Korrelieren des empfangenen Signals mit jedem der in mehreren Kandidaten-Momenten verzögerten Signale derart, dass $N_s$ jedem Kandidaten-Moment zugeordnete Korrelationswerte erhalten werden,
- Mittel, die zum Berechnen eines maximalen Korrelationswertes von den den genannten Kandidaten-Momenten zugeordneten Korrelationsschritten ausgestaltet sind.

13. Empfängervorrichtung (12) gemäß einem der Ansprüche 8 bis 11, **dadurch gekennzeichnet, dass** sie umfasst:

- Mittel, die zum Korrelieren des empfangenen Signals mit jedem der in mehreren Kandidaten-Momenten verzögerten Signale derart, dass $N_s$ jedem Kandidaten-Moment zugeordnete Korrelationswerte erhalten werden,
- Mittel, die zum Berechnen eines maximalen Korrelationswertes für jeden Kandidaten-Moment von den $N_s$ dem genannten, betrachteten Kandidaten-Moment zugeordneten Korrelationsschritten ausgestaltet sind,
- Mittel, die zum Detektieren eines Impulses in Abhängigkeit der genannten maximalen Korrelationswerte ausgestaltet sind.

14. Empfängervorrichtung (12) gemäß einem der Ansprüche 12 bis 13, **dadurch gekennzeichnet, dass** die betrachteten Kandidaten-Momente einen Anfangsmoment und einen Endmoment umfassen und die Differenz zwischen dem Anfangsmoment und dem Endmoment zwischen $T_c/2$ und $3 \times T_c/2$ inbegriffen ist.

## Claims

1. Method for the detection, by a receiver device (12), of a pulse of a signal received by said receiver device (12), said received signal corresponding to data emitted with a predetermined period $T_c$, each piece of data being encoded by a presence or an absence of a pulse, **characterized in that** said method comprises:

- A step (100) of temporally offsetting of the received signal according to a predetermined number $N_s$ of delays corresponding to different multiples of $T_c$, in such a way as to generate $N_s$ delayed signals,
- A step (200) of correlating, at a time that is a candidate for the detection of a pulse, the received signal with each of the delayed signals, in such a way as to obtain $N_s$ correlation values associated with said candidate time,
- A step (300) of calculating a maximum correlation value among the $N_s$ correlation values associated with the candidate time,
- A step (400) of detecting a pulse of the received signal according to said maximum correlation value.

2. The method according to claim 1, wherein the number of pieces of data is equal to $N_c$ and wherein two pieces of data respectively encoding presences of pulses are separated by at most $N_m$ pieces of data respectively encoding absences of pulses, the number $N_s$ of delayed signals is comprised in the interval $[N_m+1, N_c-1]$ and the respective delays of said delayed signals are determined by

$$R_j = j \times T_c,$$

with j an integer comprised in the interval $[1,N_s]$.

3. P The method according to claim 2, wherein the number $N_s$ of delayed signals is equal to $N_m+1$.

4. The method according any of claims 1 to 3, wherein the step (400) of detection of pulses of the received signal comprises a comparison of the maximum correlation value associated with said candidate time to a predetermined threshold value, in such a way that a pulse is detected at said candidate time when the maximum correlation value of said candidate time is greater than said predetermined threshold value.

5. The method according any of claims 1 to 4, wherein:

   - the received signal is correlated with each of the delayed signals at a plurality of candidate times in such a way as to obtain $N_s$ correlation values associated with each candidate time,
   - the maximum correlation value is calculated among the correlation values associated with said candidate times.

6. The method according any of claims 1 to 4, wherein:

   - the received signal is correlated with each of the delayed signals at a plurality of candidate times in such a way as to obtain $N_s$ correlation values associated with each candidate time,
   - the maximum correlation value is calculated for each candidate time, among $N_s$ the correlation values associated with said candidate times.
   - A pulse is detected according to said maximum correlation values.

7. The method according any of claims 5 to 6, wherein the candidate times considered comprise an initial time and a final time, and the difference between the final time and the initial time is between $T_c/2$ and $3 \times T_c/2$.

8. A receiver device (12) for the detection of a pulse of a signal received by said receiver device (12), said received signal corresponding to data emitted with a predetermined period $T_c$, each piece of data being encoded by a presence or an absence of a pulse, **characterized in that** said receiver device (12) comprises:

   - means configured to temporally offset the received signal according to a predetermined number $N_s$ de retards of delays corresponding to different multiples of $T_c$, in such a way as to generate $N_s$ delayed signals,
   - means configured to correlate, at a time that is a candidate for the detection of a pulse, the received signal with each of the delayed signals, in such a way as to obtain $N_s$ correlation values associated with said candidate time,
   - means configured to calculate a maximum correlation value among the $N_s$ correlation values associated with the candidate time,
   - means configured to detect a pulse of the received signal according to said maximum correlation value.

9. The receiver device (12) according to claim 8, wherein the number of pieces of data is equal to $N_c$ and wherein two pieces of data respectively encoding a presence of a pulse are separated by at most $N_m$ pieces of data respectively encoding an absence of a pulse, the number $N_s$ of delayed signals is comprised in the interval $[N_m+1,N_c-1]$ and the respective delays of said delayed signals are determined by

$$R_j = j \times T_c,$$

with j an integer comprised in the interval $[1,N_s]$.

10. The receiver device (12) according to claim 9, wherein the number $N_s$ of delayed signals is equal to $N_m+1$.

11. The receiver device (12) according to claim 8 to 10, further comprising means configured to compare the maximum correlation value associated with said candidate time to a predetermined threshold value, in such a way that a pulse is detected at said candidate time when the maximum correlation value of said candidate time is greater than said predetermined threshold value.

12. The receiver device (12) according to claim 8 to 11, further comprising:

- means configured to correlate the received signal with each of the delayed signals at a plurality of candidate times in such a way as to obtain $N_s$ correlation values associated with each candidate time,
- means configured to calculate the maximum correlation value among the correlation values associated with said candidate times.

13. The receiver device (12) according to claim 8 to 11, further comprising:

- means configured to correlate the received signal with each of the delayed signals at a plurality of candidate times in such a way as to obtain $N_s$ correlation values associated with each candidate time,
- means configured to calculate a maximum correlation value for each candidate time, among the $N_s$ correlation values associated with said candidate time considered,
- means configured to detect a pulse according to said maximum correlation values.

14. The receiver device (12) according to claim 12 or claim 13, wherein the candidate times considered comprise an initial time and a final time, and the difference between the final time and the initial time is between $T_c/2$ et $3 \times T_c/2$.

**Fig. 1**

**Fig. 2**

signal
reçu

$100_e$

$200_e$

$300_e$

$400_e$

$T_c$

$2 \times T_c$

. . .

. . .

$N_s \times T_c$

**Fig. 3**

$T_i$

$T_c$  $T_c$  $T_c$  $T_c$  $T_c$  $T_c$  $T_c$

S

$S_r^1$

$S_r^3$

**Fig. 4**

**EP 3 552 316 B1**

## RÉFÉRENCES CITÉES DANS LA DESCRIPTION

**Documents brevets cités dans la description**

- US 2001053175 A1